# EUROPEAN PATENT APPLICATION

(11) **EP 4 723 516 A1**
(43) Date of publication of application: **08.04.2026**
(21) Application number: 23943633.0
(22) Date of filing: 28.06.2023
(51) Int. Cl.: H04B 10/40, H04B 10/50, H04B 10/60

(54) **OPTICAL TRANSCEIVER**

(71) Applicant: NTT, Inc., Tokyo 100-8116 (JP)
(72) Inventor: OZAKI Josuke, Musashino-shi, Tokyo 180-8585 (JP); OGISO Yoshihiro, Musashino-shi, Tokyo 180-8585 (JP); NUNOYA Nobuhiro, Musashino-shi, Tokyo 180-8585 (JP)
(74) Representative: Samson & Partner Patentanwälte mbB
(86) International application number: PCT/JP2023/024042
(87) International publication number: WO 2025/004236

(57) **Abstract**

To present a configuration of a smooth high-frequency connection between a DSP and an optical module in an optical transceiver and to provide an optical transceiver capable of operating at an ultra-high speed. An optical transceiver according to the present disclosure includes: at least one optical module that is mounted on a PCB; a DSP that is mounted on the PCB; an FPC that connects the DSP and the optical module or the PCB and the optical module; and a differential high-frequency line that is configured such that a p-side line and an n-side line form a differential pair, and is formed such that a signal propagates inside a DSP substrate of the DSP, inside the optical module, and between the DSP and the optical module, wherein the differential high-frequency line disposed between the DSP and the optical module has at least one first bent portion.

## Description

### Technical Field

The present disclosure relates to an optical transceiver used in optical communication. More particularly, the present disclosure relates to a mounting form of an optical transceiver.

### Background Art

In order to cope with increasing communication traffic demand, a high-speed optical modulator and an optical receiver compatible with an advanced optical modulation system are required. In optical modulators and optical receivers in early 100G digital coherent communications systems, each of the components is packaged and these parts are mounted on a printed circuit board (PCB). For example, in the case of an optical modulator, a driver IC and an optical modulator chip are individually packaged, and the packaged IC and chip are mounted on the PCB. In the case of an optical receiver, a transimpedance amplifier (TIA) and an optical light-receiving chip are individually packaged and mounted as separate parts on the PCB.

In a digital coherent communications system exceeding 400G with further advanced speed, an optical modulator and an optical receiver are also required to have a wide band so as to be able to handle a signal of 40 GHz or more, and it is necessary to reduce high-frequency loss and reduce a size. In the case of the optical modulator, the driver IC and the optical modulator chip are integrally mounted in one package as an optical module. Also in the case of the optical receiver, the TIA and the optical light-receiving chip are integrally mounted as a single optical module. Also for a signal format for inputting and outputting a baseband signal, design from a single-ended format to a differential format has been generalized as one of means for achieving high speed, small size, and low power consumption. At present, device development for achieving 800 Gbps and 1 Tbps (128 GBd operation) is in progress.

The optical internetworking forum (OIF) has standardized under the name of a high-bandwidth coherent driver modulator (HB-CDM) as an optical transmitter in which a driver IC and an optical modulator are mounted in an integrated package. In Non Patent Literature 1, physical configurations, interface specifications, and the like are defined as various types of modules. Also on the reception side, the TIA and the optical light receiver are mounted in an integrated package, which is also called high-bandwidth intradyne coherent receiver (HB-ICR). An optical transceiver (optical transmission/reception device) includes a transmission-side (Tx) optical module and a reception-side (Rx) optical module.

Initially, in the above-described optical module, a surface mount (SMT) type package having excellent mountability has been used. In the optical module of the SMT type package, since the optical module is mounted on the PCB of the optical transceiver, a via (VIA) structure for passing a high-frequency electric signal into the package is essential. In the VIA, deterioration of high frequency characteristics and the like are inevitable, and thus the VIA structure is a structure not suitable for further achieving a wide band. In addition, in the SMT type package, in a connection portion between a lead pin and a ceramic package, the high-frequency transmission characteristics of an electric signal are also deteriorated due to electromagnetic field mode mismatching or impedance mismatching (Non Patent Literature 2). Therefore, a package configuration using a flexible printed circuit (FPC) is newly standardized (Non Patent Literature 1).

Optimization design including a digital signal processor (DSP) is important in achieving an increase in speed of the entire optical transceiver in addition to an increase in speed of an individual optical module. In early optical transceivers, a DSP, a transmission module, and a reception module are mounted in separate packages and mounted at separate locations on a PCB. For this reason, there is a limit to speed up of the optical transceiver due to propagation loss generated in the individual packages or on the PCB. As one of the solutions, a "co-package structure" in which an optical modulator chip, an optical receiver chip, and a DSP are mounted close to each other in a single package has also been studied. This structure is ideal that can greatly reduce the loss of a high-frequency electric signal, but the DSP, which is the largest heat generation source, is disposed close to the periphery of the optical modulator or the optical receiver. When an optical modulator that requires temperature control, such as an InP modulator that is excellent in speed, is used, the optical modulator chip needs to be mounted on a Peltier element. The Peltier element has a risk of an increase in power consumption and thermal runaway, and it is difficult to mount the Peltier element in a single package in proximity to the DSP that causes heat inflow. The co-package structure has various problems in terms of mounting processes. Therefore, another configuration of the optical transceiver has been proposed (Patent Literature 1).

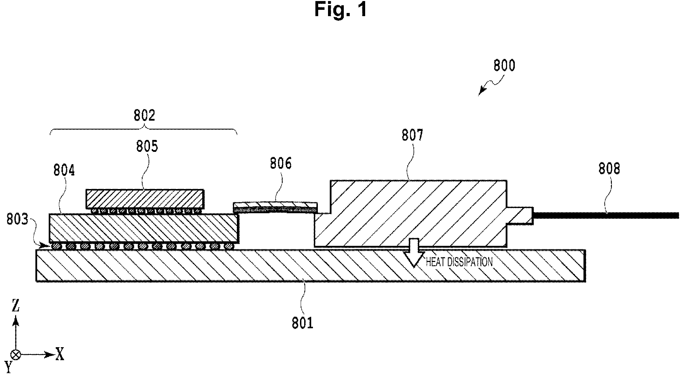

Fig. 1 is a side sectional view illustrating a configuration of an optical transceiver 800 according to conventional art adapted for high speed. A side cross section (z-x plane) of the optical transceiver 800 is illustrated taken along a line through a transmission module 807 mounted on a substrate surface (x-y plane) of a PCB 801. The optical transceiver 800 includes a DSP 802, the transmission module 807, and a reception module, which is not illustrated. In the DSP 802, a DSP chip 805 is mounted on a DSP substrate 804 using a ball grid array (BGA). The entire DSP 802 is further mounted on the PCB 801 via a BGA 803. The transmission module 807 includes a driver IC, an optical modulator chip, and the like, which are not illustrated, in a package having a terrace, and includes an optical fiber 808.

In the optical transceiver 800, a high-frequency (RF) signal is connected between the DSP 802 and the optical module 807 using an FPC 806. By using the FPC 806 as an RF interface, an RF signal line formed on the upper surface of the DSP substrate 804 and an RF signal line on the terrace of the optical module are directly connected. In an earlier optical transceiver including an optical module of an SMT type package, a signal path passing through the VIA of the DSP substrate 804, an RF signal line pattern of the PCB 801, and the VIA of the package of the optical module 807 is configured. The optical transceiver 800 of Fig. 1 is configured to minimize high-frequency losses as compared to earlier optical transceivers that utilize the SMT type package. In addition, options of optical modulators are not limited unlike optical transceivers having a co-package structure, and mounting is more feasible. It is also possible to sufficiently suppress the high-frequency loss as compared with earlier optical transceivers using the SMT type package.

However, in the optical transceiver 800 of the conventional art in Fig. 1, a specific connection configuration between the FPC 806 and the DSP 802, a structure of the FPC 806, and a connection configuration between the FPC 806 and the optical module 807 are not clear. The configurations of the DSP and the DSP substrate are not clear either. In addition, in the transmission module 807 of Fig. 1, a heat generation component such as the driver IC inside the package is thermally connected to the side where the terrace is located and the PCB side, and the heat dissipation direction is downward with respect to the optical transceiver 800 (-z direction). On the other hand, since the DSP chip 805 is on the upper side in the DSP 802, the heat dissipation direction is upward with respect to the optical transceiver (+z direction). The heat dissipation is divided into two directions, which is not preferable for simplifying the heat dissipation structure.

### Citation List

### Patent Literature

Patent Literature 1: WO 2021/171599 A

### Non Patent Literature

Non Patent Literature 1: OIF, Implementation Agreement for the High Bandwidth Coherent Driver Modulator (HB-CDM), [online], July 15,2021, [Searched on January 20, 2023], the Internet <URL: https://www.oiforum.com/wp-content/uploads/OIF-HB-CDM-02.0.pdf>
Non Patent Literature 2: J. Ozaki et al., "Over-85-GHz-Bandwidth InP-Based Coherent Driver Modulator Capable of 1-Tb/s/λ-Class Operation," in Journal of Lightwave Technology, vol. 41, no. 11, pp. 3290-3296, 1 June1, 2023, doi: 10.1109/JLT.2023.3236962.

### Summary of Invention

An object of the present disclosure is to present a configuration of a smooth high-frequency connection between a DSP and an optical module in an optical transceiver and to provide an optical transceiver capable of operating at an ultra-high speed.

Based on the above object, the present disclosure provides an optical transceiver, including: at least one optical module that is mounted on a printed circuit board (PCB); a digital signal processor (DSP) that is mounted on the PCB; a flexible printed circuit (FPC) that connects the DSP and the optical module or the PCB and the optical module; and a differential high-frequency line that is configured such that a p-side line and an n-side line form a differential pair, and is formed such that a signal propagates inside a DSP substrate of the DSP, inside the optical module, and between the DSP and the optical module, in which the DSP includes a DSP chip mounted on the DSP substrate, the FPC includes a first connection PAD of a first surface solder-connected to a PAD of a terrace surface of the optical module and a second connection PAD of a second surface solder-connected to a PAD of an upper surface of the DSP substrate, the DSP chip is connected to the DSP chip by a signal line in an inner layer of a multilayer wiring substrate from the PAD on the DSP substrate through a via (VIA), and a differential high-frequency line disposed between the DSP and the optical module has at least one first bent portion.

### Brief Description of Drawings

Fig. 1 is a side sectional view illustrating a configuration of an optical transceiver 800 according to conventional art adapted for high speed.
Fig. 2 is a top view and a cross-sectional view illustrating an outline of a configuration of an optical transceiver 100 according to the present disclosure, Fig. 2(a) is a top view of a substrate surface (x-y plane) of a PCB 101, and Fig. 2(b) is a side sectional view (x-z plane) taken along IIb-IIb passing through a Tx module 400.
Fig. 3 is an enlarged view of a portion corresponding to an FPC 500-1 in Fig. 2(a).
Fig. 4 is a diagram illustrating simulation results for the FPC 500-1 including a differential high-frequency line 501 in which a phase difference adjustment bend 502 is not formed, Fig. 4(a) illustrates a model used for simulation, Fig. 4(b) illustrates a simulation result of Group Delay, and Fig. 4(c) illustrates a result of calculated in-phase characteristics.
Fig. 5 is a diagram illustrating simulation results for the FPC 500-1 including a differential high-frequency line 501 in which a phase difference adjustment bend 502 having a total length of about 400 µm is formed, Fig. 5(a) illustrates a model used for simulation, Fig. 5(b) illustrates a simulation result of Group Delay, and Fig. 5(c) illustrates a result of calculated in-phase characteristics.
Fig. 6 is a diagram illustrating simulation results for the FPC 500-1 including a differential high-frequency line 501 in which a phase difference adjustment bend 502 having a total length of about 450 µm is formed, Fig. 6(a) illustrates a model used for simulation, Fig. 6(b) illustrates a simulation result of Group Delay, and Fig. 6(c) illustrates a result of calculated in-phase characteristics.

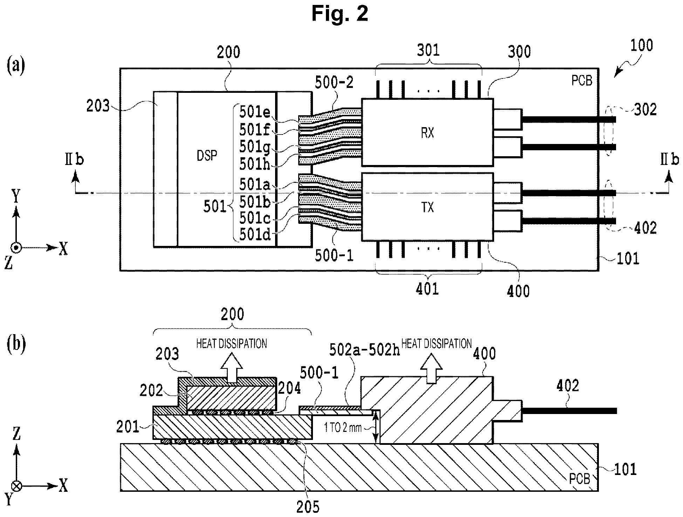

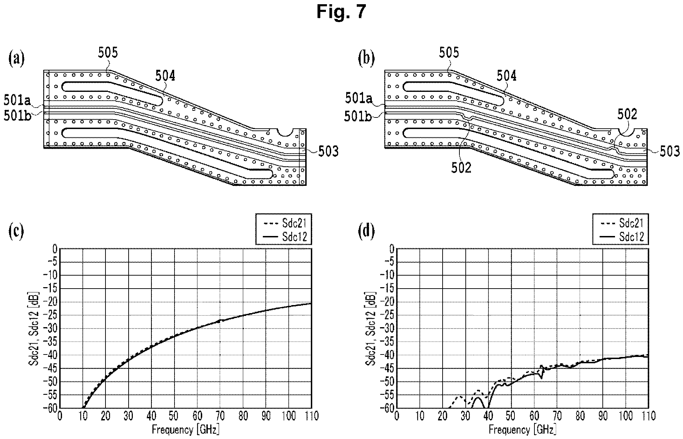

Fig. 7 is a diagram illustrating results of comparing in-phase characteristics depending on the presence or absence of the phase difference adjustment bend 502 in the FPC 500-1 having two bent portions similarly to Fig. 2, Fig. 7(a) illustrates a simulation model in a case where the phase difference adjustment bend 502 is not formed in the differential high-frequency line 501, Fig. 7(b) illustrates a simulation model in a case where one phase difference adjustment bend 502 is formed in each of a p-side line 501a and an n-side line 501b, Fig. 7(c) illustrates a result of in-phase characteristics in a case where the phase difference adjustment bend 502 is not formed in the differential high-frequency line 501, and Fig. 7(d) illustrates a result of in-phase characteristics in a case where one phase difference adjustment bend 502 is formed in each of the p-side line 501a and the n-side line 501b.
Fig. 8 is a view illustrating an outline of a configuration of an optical transceiver 600 according to the present disclosure, Fig. 8(a) illustrates a top view, and Fig. 8(b) illustrates a cross-sectional view taken along line VIIIb-VIIIb.
Fig. 9 is a view illustrating an outline of a configuration of an optical transceiver 700 according to the present disclosure, Fig. 9(a) illustrates a top view, and Fig. 9(b) illustrates a cross-sectional view taken along line IXb-IXb.
Fig. 10 is a view illustrating a cross-sectional structure of a Tx module of the optical transceiver of the present disclosure.

### Description of Embodiments

Hereinafter, various embodiments of the present disclosure will be described in detail with reference to the drawings. The same or similar reference signs denote the same or similar components, and redundant description may be omitted. The numerical values are for purposes of illustration and are not intended to limit the scope of the present disclosure. In addition, the following description is an example, and some configurations may be omitted, modified, or implemented together with additional configurations without departing from the gist of an embodiment of the present disclosure. In addition, the drawings illustrate examples of the embodiment of the present disclosure, and are not intended to be limiting. For example, in an optical transceiver according to the present disclosure, the number of channels may be greater or less than the number illustrated.

An optical transceiver according to the present disclosure presents a specific configuration that implements smooth high-frequency connection between a DSP and an optical module. The optical module may include an optical receiver module and an optical modulator module. The optical transceiver may include two separate optical modules, or may include a single optical module in which functions of both the optical receiver and the optical modulator are integrated. For the high-frequency connection, a flexible substrate (hereinafter, the FPC) is used. The FPC electrically connects a PAD on the upper surface of the DSP substrate and a PAD of the package of the optical module using both surfaces. The connection PAD on one surface of the FPC is connected to a DSP substrate side, and the connection PAD on the other surface is connected to an optical module side. A DSP chip may be mounted on the DSP substrate in the DSP, and the entire DSP may be covered with a lid except for a region of the DSP substrate connected to the FPC.

A detailed structure of a connection PAD on a DSP substrate, a shape of a high-frequency wiring, a structure of a multilayer wiring substrate, and a structure of an FPC for avoiding deterioration of transmission characteristics of a high-frequency signal due to impedance mismatching, high-frequency crosstalk, and the like is disclosed. Hereinafter, a detailed configuration of the optical transceiver will be described with reference to the drawings.

In the following description, for the sake of simplicity, a transmission-side optical module including an optical modulator and its driver IC is referred to as a "Tx module", and a reception-side optical module including a photodetector (PD) and a TIA is referred to as an "Rx module". A single optical module in which functions of both the Tx module and the Rx module are integrated is referred to as a TRx module. In the following description, an optical transceiver including an Rx module and a Tx module is described as an example, but two modules may be replaced with one TRx module. In addition, in the following description, the description will be made based on the cross section of the Tx module, but the connection form of the DSP and the optical module using the FPC is the same for the Rx module having a substantially symmetrical shape with the Tx module. The similar configuration of the PAD shape of the FPC between the DSP and the Tx module and the PAD shape of the FPC between the DSP and the Rx module is efficient also in terms of high-frequency design. It is also possible to suppress variations in solder mounting quality and connection strength in the entire optical module.

### [Basic Configuration of Optical Transceiver]

Fig. 2 is a top view and a cross-sectional view illustrating an outline of a configuration of an optical transceiver 100 according to the present disclosure. (a) of Fig. 2 is a top view of a substrate surface (x-y plane) of a PCB 101, and (b) of Fig. 2 is a side sectional view (x-z plane) taken along IIb-IIb passing through a Tx module 400. In the optical transceiver 100, a DSP 200, an Rx module 300, and the Tx module 400 are mounted on the PCB 101.

In addition, various electric components and mechanical components such as a chip capacitor and a resistor are mounted on the upper surface and the lower surface of the PCB 101, but are omitted in Fig. 1. In the optical transceiver 100, the heat dissipation surfaces of the DSP 200, the Rx module 300, and the Tx module 400 are aligned in one direction in consideration of manufacturability when each part is mounted on the PCB 101, simplification of the heat dissipation structure of the optical transceiver 100, and the like. Considering that heat generation from a DSP chip 202 is the largest in the optical transceiver 100, it is desirable to align the direction of heat dissipation upward (+z direction) that is appropriate for heat dissipation of the DSP chip 202.

Referring to the cross-sectional view in (b) of Fig. 2, in contrast to the configuration of the conventional art, the optical transceiver 100 is disposed such that the upper and lower surfaces in a state of being mounted on the PCB 101 are inverted and the side on which the terrace is located is the upper side in the height direction (z axis) of the optical module. The optical module is mounted such that the terrace surface faces the upper surface of the PCB, and in the case of the Tx module 400, heat from the driver IC and the Peltier element is configured to move toward the side where the terrace surface of the package is located (in the +z direction).

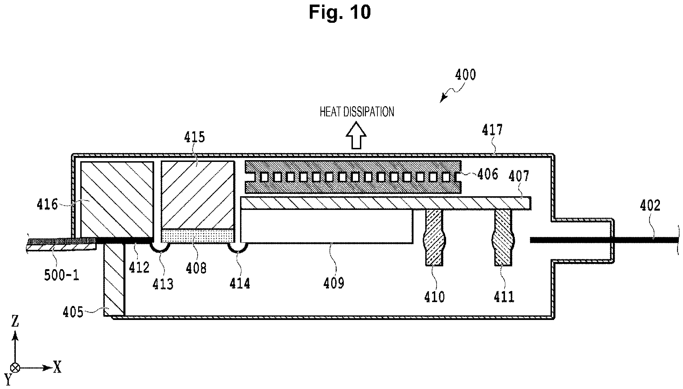

Fig. 10 is a view illustrating a cross-sectional structure in a Tx module in the optical transceiver of the present disclosure. In the Tx module 400, a Peltier element 406, a substrate 407, and an optical modulator chip 409 are disposed in this order inside a housing 417. On the substrate, lenses 410 and 411 are provided and optically coupled to an optical fiber 402. In the module, a driver IC 408 is formed on the surface of a base 415, and wiring 412 is formed on a package base 416. The optical modulator chip 409 to the wiring 412 are connected by wires 413 and 414. The inside and the outside of the module are partitioned by the housing 417, the package base 416, and a package sidewall 405. A terrace surface of the optical module is configured by exposing a part of the package base 416 from the housing. An FPC 500-1 is connected to the terrace surface.

The Peltier element 406 for temperature control and the base 415 thermally connected to the driver IC, which is a heat generation component, are fixed to an upper surface inside the housing 417. Heat dissipation from the inside of the module is configured such that heat moves from the driver IC or the Peltier element to the outside in the +z direction. Also in the Rx module, a TIA is provided instead of the driver IC, and heat from the inside of the module moves to the upper side (+z direction) of the module.

As described above, in the package of the optical module, a heat generation component is mounted so as to dissipate heat toward a bottom surface opposite to a mounting surface on the PCB. Accordingly, it is possible to adopt a heat dissipation mechanism (housing) in which one common heat dissipation surface, which is not illustrated, is disposed on the upper side of the optical transceiver 100 with respect to heat dissipation from the DSP 200 and heat dissipation from the Tx module 400. The optical module and the DSP are disposed close to each other, and at the same time, the DSP and the optical module have the same upper surface height, so that heat dissipation of the DSP and the optical module can be easily performed with a single heat dissipation mechanism. In the case of a common heat dissipation mechanism, it is necessary to sufficiently consider that heat does not move from the DSP to the optical module. In addition, in order to suppress such movement of heat via the heat dissipation mechanism, a separate heat dissipation mechanism on the same plane can be used for the DSP and the optical module.

The DSP 200 includes the DSP substrate 201 including a multilayer wiring substrate described below, the DSP chip 202, and a lid (cover) 203. The DSP chip 202 and the DSP substrate 201 are connected by a BGA 204. Similarly, the DSP substrate 201 and the PCB 101 are also connected by a BGA 205.

The lid 203 is made of an integrated metal so as to cover at least the entire region of the upper surface of the DSP chip 202 and a region excluding a region to which the FPCs 500-1 and 500-2 are connected/fixed on the upper surface of the DSP substrate. The lid 203 may cover a side surface of the DSP chip 202 and may protrude from the periphery of the DSP substrate 201. By finely contriving the shape of the lid 203, it is possible to bring the surface of the DSP substrate 201 from an RF connection PAD for connection with the FPC to a substrate end into an open state. As described above, the DSP 200 can be prepared as a DSP module in a state where the DSP chip 202 and the lid 203 are mounted on the DSP substrate 201. Although the manufacturing process of the optical transceiver 100 will be described below, when the DSP 200 is prepared in the form of a lidded DSP module, the DSP 200 can be safely mounted on the PCB 101 without causing damage in the manufacturing process, similarly to the Rx module 300 and the Tx module 400.

As another form of the DSP 200, it is also possible to prepare in a state where only the DSP chip 202 is mounted on the DSP substrate without the lid 203. It is also possible to connect the DSP 200 without the lid 203 and the optical modules 300 and 400 with the FPCs 500-1 and 500-2, respectively, and then finally attach the lid 203. When the lid is mounted, there may be a risk that an inadvertent force is applied to the FPC or the wiring of the FPCs 500-1 and 500-2 is short-circuited by the lid 203. Therefore, it is necessary to sufficiently optimize the PAD position of the region including the connection PAD on the upper surface of the DSP substrate 201 and the shape of the lid 203. Since the DSP chip and the DSP substrate are exposed until immediately before the lid is mounted, it is necessary to pay careful attention so as not to damage the DSP chip and the like.

When the DSP 200 includes the lid 203, the footprint of the lid 203 is always smaller than the footprint of the DSP substrate 201 on the substrate surface (x-y plane). On the other hand, the footprint of the DSP chip 202 is included in the footprint of the lid 203. On the substrate surface of the DSP substrate 201, the lid 203 is not provided only in the region where at least the RF connection PAD is provided.

In the manufacturing process of the optical transceiver 100, when damage to the DSP chip 202 and the BGAs 204 and 205 can be avoided, the lid 203 can be omitted. In order to effectively release heat dissipated from the DSP chip 202 to the outside of the optical transceiver, the lid 203 may be simply provided only on the upper surface of the DSP chip 202. The shape of the lid 203 can be variously modified.

The Rx module 300 and the Tx module 400 are each housed in a package. The two optical modules 300 and 400 and the DSP 200 are directly connected by the FPCs 500-1 and 500-2 as RF interfaces for electric signals. Here, "directly" connected means that the connection PAD on the terrace of the optical module and the connection PAD on the DSP substrate are connected only via the FPCs 500-1 and 500-2. Accordingly, in the optical transceiver 100, there is no high-frequency path through the VIA connecting the optical module to the PCB, the RF signal line in the PCB, the BGA connecting the PCB and the DSP substrate, and the VIA in the DSP substrate. In the optical transceiver 100, an electric signal does not pass through a VIA or a BGA that leads to deterioration of high frequency characteristics, as compared with an optical transceiver including an optical module of an SMT type package of the conventional art. The DSP and the optical module can be connected by the shortest high-frequency path, and high-frequency loss can be greatly reduced. In addition, since the number of connection portions such as the VIA, the BGA, and the like is reduced, the configuration of the optical transceiver of Fig. 2 is very effective also from the viewpoint of reducing the high-frequency loss due to impedance mismatching occurring at a discontinuous portion of the high-frequency path.

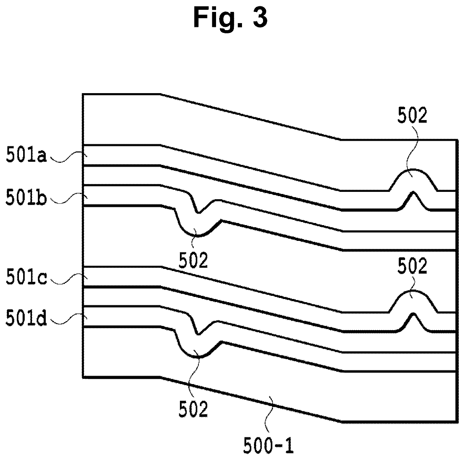

In addition, in Fig. 2, although illustration is omitted for simplicity, the differential high-frequency line 501 further includes the phase difference adjustment bend 502. The phase difference adjustment bend 502 is a bend intentionally provided to eliminate a phase difference between p and n after bending in an RF signal propagating through each of the p-side line 501a and the n-side line 501b forming a differential pair (detailed description of the differential high-frequency line 501 and the phase difference adjustment bend 502 will be given below with reference to Fig. 3).

The direct current (DC) interface of the optical modules 300 and 400 can be, for example, DC lead pins 301 and 401 as in (a) of Fig. 2. The DC interface is not limited to the lead pin structure, and an FPC may be used similarly to the RF interface with the DSP 200. The DC lead pins 301 and 401 are solder-mounted on a PAD, which is not illustrated, of the PCB 101 so that power can be supplied from the outside of the optical transceiver.

Referring again to the top view of the optical transceiver 100 in (a) of Fig. 2, the Rx module 300, the Tx module 400, and the DSP 200 are optimally disposed to minimize the loss of an RF signal, which is a high-frequency electric signal. The two modules and the DSP 200 are disposed symmetrically relative to the center line along a longitudinal direction of the PCB 101. In order to achieve a high-speed optical transceiver, it is important to suppress a high-frequency loss of an RF signal from the DSP 200 to the Tx module and an RF signal from the Rx module to the DSP 200. The length of each of the FPCs 500-1 and 500-2 functioning as the RF interface needs to be as short as possible. In the optical transceiver 100 of Fig. 2, it is preferable to bring a distance (gap) in a y-axis direction of the two optical modules close to 1 mm or less in order to transmit a high-speed signal of more than 128 GBd.

In order to disposed the two optical modules close to each other, it is necessary to collect the DC lead pins on one side of each module and face the DC lead pins in opposite directions. As illustrated in (a) of Fig. 2, the DC lead pins 401 of the Tx module 400 are directed toward the outer periphery of the PCB 101 in a -y-axis direction (downward in the figure), and the DC lead pins 301 of the Rx module 300 are directed toward the outer periphery of the PCB 101 in a +y-axis direction (upward in the figure). This configuration follows the direction of the lead pin defined in the HB-CDM standardized by the OIF as described in Non Patent Literature 1.

The packages of the optical modules 300 and 400 are made of ceramics. Considering the layout design of the high-frequency signal line and the DC line in the optical modules 300 and 400, the height from the upper surface of the PCB 101 to the terrace surface of the optical modules 300 and 400 in the cross-sectional view of (b) of Fig. 2 is desirably about 1 to 2 mm. The thickness of the DSP substrate 201 is desirably similarly set in a range of about 1 to 2 mm from the viewpoint of matching the height with the terrace surface of the optical modules 300 and 400.

When the DSP substrate has a thickness of about 1 to 2 mm, more layers than necessary for the DC line and the RF line can be used. In general, in a multilayer wiring substrate, it is desirable to minimize the number of layers as much as possible in terms of cost, and thus a core layer for adjusting the thickness of the entire substrate can be used inside. The multilayer wiring substrate including such a core layer may be referred to as a build-up substrate. The core layer functions as a separation layer that separates an RF wiring layer and a DC wiring layer in addition to adjust the entire substrate thickness. By providing the core layer, the DC layer and the RF wiring layer can be largely separated from each other, so that mutual interference between the wiring layers and an effect of noise can be suppressed.

In consideration of high-speed DSP operation as described above, the DSP 200 is desirably accommodated in the DSP substrate 201 having a small size in order to suppress the loss of a high-frequency signal and the cost. The two FPCs 500-1 and 500-2 and the differential high-frequency line 501 formed thereon should be configured to converge on the center line of the DSP 200 from the optical modules 300 and 400 side toward the DSP 200 side. As will be described below, the FPCs 500-1 and 500-2 illustrated in Fig. 2 both have a shape bent in a plane (x-y plane) of the base materials, which are previously shaped into a predetermined shape. Although it is also possible to form the FPCs in a straight line shape without bending, it is necessary to spread and dispose the PAD in a fan shape on the substrate surface of the DSP substrate 201. The high-frequency loss on the DSP substrate increases, and the size of the DSP substrate also increases, which is not desirable.

As described above, since the two FPCs 500-1 and 500-2 have a bent shape in the plane (x-y plane) of the base materials, as illustrated in Fig. 2, the differential high-frequency line 501 formed thereon also has a bent shape in the plane (x-y plane) of the base materials so as to follow the bent shape. In the differential high-frequency line 501 having such a shape, there is a problem that a phase difference occurs after the bent portion between p-side lines 501a, 501c, 501f, and 501h and n-side lines 501b, 501d, 501e, and 501g forming a differential pair. Specifically, at the bent portion, since the line length is shorter in the line disposed on the inner side than in the line disposed on the outer side, the signal travels ahead, and accordingly, a phase difference occurs between the signal propagating through the line on the inner side and the signal propagating through the line on the outer side. When the signal is transmitted while such a phase difference is generated, this leads to deterioration of high frequency characteristics and generation of noise. More specifically, at the bent portion between the p-side lines 501a, 501c, 501f, and 501h and the n-side lines 501b, 501d, 501e, and 501g, a phase difference shift between the p-side lines 501a, 501c, 501f, and 501h and the n-side lines 501b, 501d, 501e, and 501g is generated, and the signal is transmitted unstably while the phase difference shift occurs at a straight portion after the bent portion, and in in-phase characteristics (Sdc21 and Scd21), deterioration of the characteristics occurs. In addition, in a differentially driven optical transceiver, generally, a main characteristic is a differential high frequency characteristics (Sdd21 characteristic or the like), but in-phase characteristics represent noise, and an increase in noise due to such a phase shift of a differential pair also leads to deterioration of transmission characteristics, and therefore, a configuration for suppressing deterioration of the in-phase characteristics is necessary. In particular, when a signal is transmitted at a high speed exceeding 128 GBd, the effect of such a phase difference becomes more significant, and thus it is important to introduce a configuration for suppressing deterioration of the in-phase characteristics.

### [Configuration of FPC and Differential High-Frequency Line]

Fig. 3 is an enlarged view of a portion corresponding to the FPC 500-1 in Fig. 2(a). Note that, although the FPC 500-1 is illustrated in Fig. 3, the FPC 500-2 may also have a similar structure. As illustrated in Fig. 3, the differential high-frequency line 501 formed on the FPC 500-1 of the optical transceiver 100 according to the present disclosure further includes the phase difference adjustment bend 502 in the line on the inner side (shorter side) of the bent portion following the FPC 500-1. The phase difference adjustment bend 502 compensates for a shortened line length of the line on the inner side, and eliminates a phase difference generated after bending between the p-side line 501a and the n-side line 501b and between the p-side line 501c and the n-side line 501d. Since it is not desirable in terms of characteristics to propagate in a state where the phases are shifted, it is necessary to introduce such a phase difference compensation mechanism as early as possible immediately after bending.

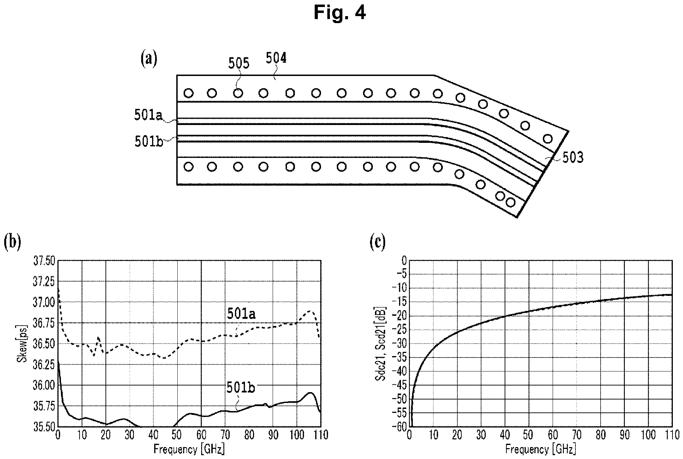

For example, in order to eliminate the effect on the transmission characteristics, the in-phase characteristics (Sdc21 and Scd21) of each component (for example, the PCB 101, the FPCs 500-1 and 500-2, the DSP substrate 201, a high-frequency package constituting the optical module, and the like) need to be configured to be at least -30 dB or less within a necessary operation frequency band (for example, the frequency is about 0.6 to 0.7 times the baud rate). In order to achieve the in-phase characteristics of -30 dB or less within the necessary frequency band, it is necessary to form the phase difference adjustment bend 502 at a position within a length 1/2 times the guide wavelength at the maximum frequency of the necessary frequency band before and after the bent portion following the FPC 500-1 with reference to the length in the case where the phase adjustment bend 502 is not formed. When the length exceeds 1/2 times the guide wavelength, characteristic deterioration due to a phase difference greatly occurs with respect to a wavelength corresponding to the frequency, and in-phase characteristics of -30 dB or less cannot be achieved. In addition, in order to achieve very favorable in-phase characteristics, it is very effective to bring the place where the phase difference adjustment bend is formed closer to the vicinity of the bent portion, such as within 1/4 times the length. When it is within 1/4 times, even when it is brought closer (for example, within 1/8 times), further improvement effect cannot be expected. In addition, the phase difference between the p-side line 501a and the n-side line 501b needs to be at least ± 0.2 ps or less after the phase difference is eliminated by phase difference adjustment bend. When the phase difference more than this occurs, in-phase characteristics are significantly deteriorated, and it becomes difficult to achieve desirable in-phase characteristics (-30 dB or less) (the quantitative evaluation of the phase difference and the in-phase characteristics will be described below with reference to Figs. 4 to 7).

On the other hand, by forming the phase difference adjustment bend 502, the net length of the differential high-frequency line 501 itself becomes long, and accordingly, an adverse effect such as a loss of a high-frequency signal can also be assumed. Accordingly, the length of the phase difference adjustment bend 502 (the length increased by the formation of the phase difference adjustment bend 502) needs to be suppressed to 1/2 times or less the guide wavelength at the maximum frequency of the necessary frequency band from the viewpoint of preventing generation of a large effect on the differential high frequency characteristics (Sdd21) with respect to the wavelength of the maximum frequency. However, it goes without saying that a smaller value such as 1/4 times or less is desirable from the viewpoint of preventing any characteristic abnormality of the differential pair due to the introduction of the phase difference adjustment bend 502 from being seen.

As a measure for preventing the length of the phase difference adjustment bend 502 from being excessively long, it is effective to suppress the phase difference between p and n at the bent portion following the FPC 500-1. In order to suppress the phase difference at the bent portion, it is possible to make the signal line width in the bent portion narrower and bend the bent portion smaller with respect to the straight portion of the differential high-frequency line 501. However, in a case where the signal line width is narrowed only in the bent portion, the impedance increases, and narrowing the signal line width only in the bent portion as compared with the signal line width of the straight portion in which impedance matching is simply performed causes impedance mismatching, and characteristic deterioration associated therewith may occur. In such a case, for example, the FPC 500-1 has a GSSG configuration or a GSGSG configuration, and impedance mismatching can be resolved by shortening the distance between the G (ground) and S (signal) lines and increasing the impedance at a portion where the signal line width is narrowed. In the case of the SS line configuration, since there is no GND pattern on both sides, such adjustment cannot be performed, and despite a differential line configuration, it is not desirable.

On the other hand, even when only the portions of the FPCs 500-1 and 500-2 have favorable characteristics, when the characteristics of other elements such as the DSP substrate 201, the PCB 101, and the optical modules 300 and 400 are low, the transmission characteristics are deteriorated in these elements. Accordingly, it is desirable to adjust the phase difference by introducing such a phase difference adjustment bend structure or the like such that in-phase characteristics (Sdc21, Scd21) of elements of not only the FPCs 500-1 and 500-2 but also the DSP substrate 201, the PCB 101, and the optical modules 300 and 400 are all -30 dB or less. As described above, also in a case where the phase adjustment bend 502 is formed for each element of the DSP substrate 201, the PCB 101, and the optical modules 300 and 400, similarly to the case where the phase adjustment bend 502 is formed on the FPCs 500-1 and 500-2, the phase adjustment bend 502 needs to be formed on the front and rear sides of the bent portion (that is, a portion where a difference occurs in line length between the inner side and the outer side) of the differential high-frequency line 501 or within the range of the bent portion.

In the above description, the phase difference between p and n (between the p-side line 501a and the n-side line 501b) and the configuration (the phase difference adjustment bend 502) for eliminating the phase difference have been described. However, in consideration of the usage of the optical transceiver, it is desirable that there is no variation in phase between the channels, and for example, it is desirable that the lengths between the channels are made equal in the FPCs 500-1 and 500-2 described above. In addition, it is desirable that the length equalization is performed not only in the FPCs 500-1 and 500-2 but also in the DSP substrate 201, the PCB 101, and the optical modules 300 and 400.

### [Verification Result by Simulation]

With reference to Figs. 4 to 7, a result of simulation verification of elimination of the phase difference between p and n by formation of the phase difference adjustment bend 502 described above will be described below. In the simulation, an FPC 500-1 using polyimide resin in which metal is formed on both surfaces of a base material 503 having the differential high-frequency line 501 is used as a model. In addition, in the simulation, the FPC 500-1 used as a model aimed to be compatible with 150 GBd class. In such a case, in-phase characteristics (Sdc21 and Scd21) are required to be -30 dB or less for frequencies up to about 100 GHz.

Fig. 4 is a diagram illustrating simulation results for one bent portion (left half of the drawing) of the FPC 500-1 including the differential high-frequency line 501 in which the phase difference adjustment bend 502 is not formed, for evaluation of phase shift amount, Fig. 4(a) illustrates a model used for simulation, Fig. 4(b) illustrates a simulation result of Group Delay, and Fig. 4(c) illustrates a result of calculated in-phase characteristics. In the structure in which the bending is performed twice and the first bending angle and the second bending angle are offset (the differential high-frequency line before the first bending and the differential high-frequency line after the second bending are parallel) as in the FPC500-1, the phase difference disappears in total by the two times of bending: the bending on the input side and the bending on the output side, and the simulation is not visible, and therefore, in order to be able to observe the phase difference due to the phase adjustment bend, the model of the FPC 500-1 is not a shape having the bending of the two times as illustrated in Fig. 2, but a shape having only one bending. This makes it possible to accurately grasp the occurrence of the phase difference due to bending. The total length of the differential high-frequency line 501 is about 6.5 mm on average (however, as described above, the line is actually shorter on the inner side). In addition, the model used in the simulation is a model in which an RF signal is input from the right side of the drawing and the RF signal is transmitted toward the left side of the drawing. The signal line width is set to about 100 µm, and the differential impedance is adjusted to about 100 Ω ± 5%. Further, the model is configured to include a ground 504 and through-holes 505. The phase difference at which the difference in Group Delay is the above-described point is illustrated.

As illustrated in Fig. 4(b), when the phase difference adjustment bend 502 is not provided, the phase difference between p and n (between the p-side line 501a and the n-side line 501b) is about 1 ps at a frequency of 100 GHz. In addition, as illustrated in Fig. 4(c), Sdc21 and Scd21 are -30 dB or more at about 12 GHz, and it can be seen that the in-phase characteristics at a frequency of 100 GHz are about -12.5 dB, and the in-phase characteristics at a frequency of 100 GHz do not satisfy - 30 dB or less described above.

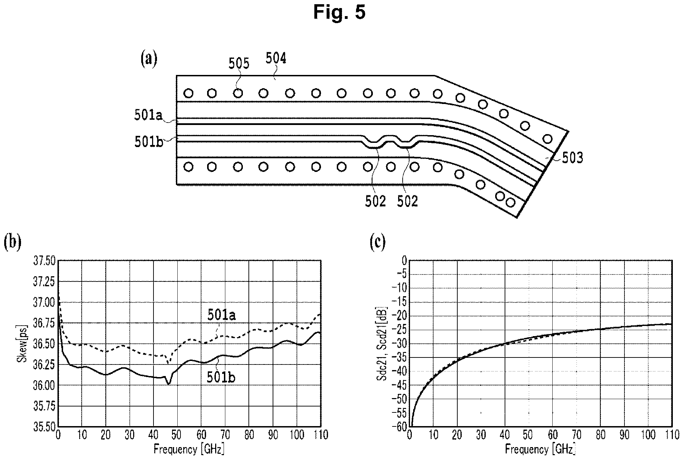

Fig. 5 is a diagram illustrating simulation results for the FPC 500-1 including the differential high-frequency line 501 in which the phase difference adjustment bend 502 having a total length of about 400 µm is formed, Fig. 5(a) illustrates a model used for simulation, Fig. 5(b) illustrates a simulation result of Group Delay, and Fig. 5(c) illustrates a result of calculated in-phase characteristics. Conditions for the simulation are the same as those in Fig. 4 except that the phase difference adjustment bend 502 is formed. Note that the total length (about 400 µm) of the phase difference adjustment bend 502 is set to be shorter than 1/4 times (about 500 µm) the guide wavelength at a frequency of 100 GHz when the relative permittivity of polyimide is 3.3. In this model, as an example, a plurality of small bends is inserted unlike Fig. 3. As described above, the number of bends is not necessarily one, and a plurality of bends may be provided. Naturally, when two bends are provided, the size of each bend tends to be smaller than the structure of one bend. However, when a plurality of bends is generated, the bending angle becomes an acute angle because the bends are small, and there is a possibility that high frequency characteristics are deteriorated due to this, and therefore, it is desirable that the number of additional phase adjustment bends is one and the angle of bending is loose as much as possible.

As illustrated in Fig. 5(b), when the phase difference adjustment bend 502 having a total length of about 400 µm is formed, the phase difference at a frequency of 100 GHz has a value slightly exceeding 0.2 ps, and it can be seen that the phase difference is improved as compared with the case where the phase difference adjustment bend illustrated in Fig. 4 is not formed. However, as illustrated in Fig. 5(c), Sdc21 and Scd21 at a frequency of 100 GHz are about -23 dB, and the required in-phase characteristics (-30 dB or less) are not satisfied.

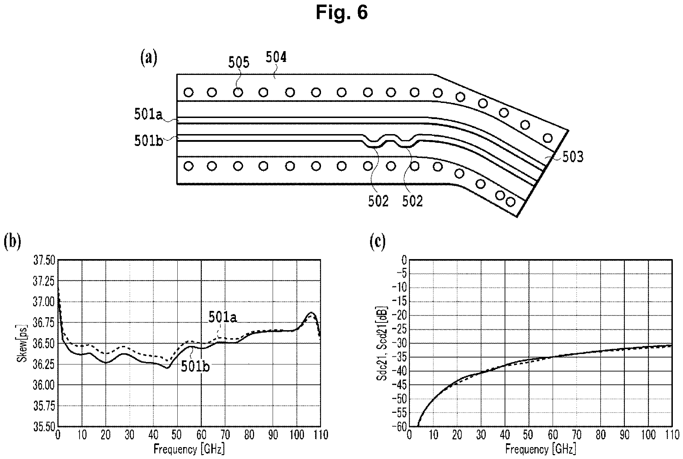

Fig. 6 is a diagram illustrating simulation results for the FPC 500-1 including the differential high-frequency line 501 in which the phase difference adjustment bend 502 having a total length of about 450 µm is formed, Fig. 6(a) illustrates a model used for simulation, Fig. 6(b) illustrates a simulation result of Group Delay, and Fig. 6(c) illustrates a result of calculated in-phase characteristics. As in the case illustrated in Fig. 5, conditions for the simulation are the same as those in Fig. 4 except that the phase difference adjustment bend 502 is formed.

As illustrated in Fig. 6(b), when the phase difference adjustment bend 502 having a total length of about 450 µm is formed, the phase difference at a frequency of 100 GHz is about 0 ps, and it can be seen that the phase difference can be suppressed to about 0.1 to 0.15 ps in other frequency bands. In addition, when the phase difference between p and n is suppressed to ± 0.2 ps or less in this way, as illustrated in Fig. 6(c), Sdc21 and Scd21 at 100 GHz are about -30 dB, and it can be seen that sufficient in-phase characteristics can be achieved within the necessary frequency band with respect to the necessary baud rate. Note that, also in the simulation of Fig. 6, the length of the phase difference adjustment bend (about 450 µm) is adjusted to be shorter than about 500 µm corresponding to a length 1/4 times the guide wavelength at a frequency of 100 GHz of the FPC 500-1. When the phase difference can be brought close to almost zero at all frequencies, further improvement in in-phase characteristics can be expected.

Fig. 7 is a diagram illustrating results of comparing in-phase characteristics depending on the presence or absence of the phase difference adjustment bend 502 in the FPC 500-1 having two bent portions similarly to Fig. 2, Fig. 7(a) illustrates a simulation model in a case where the phase difference adjustment bend 502 is not formed in the differential high-frequency line 501, Fig. 7(b) illustrates a simulation model in a case where one phase difference adjustment bend 502 is formed in each of a p-side line 501a and an n-side line 501b, Fig. 7(c) illustrates a result of in-phase characteristics in a case where the phase difference adjustment bend 502 is not formed in the differential high-frequency line 501, and Fig. 7(d) illustrates a result of in-phase characteristics in a case where one phase difference adjustment bend 502 is formed in each of the p-side line 501a and the n-side line 501b. In Fig. 7(d), the phase difference in the vicinity of the bent portion and the shape/disposition of the bent portion conform to the above-described rules. As illustrated in Figs. 6(c) and 6(d), the in-phase characteristics at a frequency of 100 GHz are about -22 dB for both Sdc21 and the Scd21 when the phase difference adjustment bend 502 is not formed in the differential high-frequency line 501, whereas the in-phase characteristics are about -40 dB for both Sdc21 and Scd21 when one phase difference adjustment bend 502 is formed in each of the p-side line 501a and the n-side line 501b. From this result, it can be seen that forming the phase difference adjustment bend 502 with respect to the FPC 500-1 having the two bends as illustrated in Fig. 2 can achieve sufficient in-phase characteristics in high-speed signal transmission exceeding 128 GBd.

Note that, in Fig. 7, the model is such that one phase difference adjustment bend 502 is formed in each of the p-side line 501a and the n-side line 501b, but the number of phase difference adjustment bends 502 to be formed is not limited, and any number may be formed according to design.

In the model used in the simulation described above, for simplification, the signal line width of the bent portion following the FPC 500-1 in the differential high-frequency line 501 is constant similarly to the straight portion. In addition, although the ground 504 of the phase difference adjustment bend 502 has a constant shape, in order to further stabilize the in-phase characteristics, it is desirable that the distance between the signal line (differential high-frequency line 501) and the ground 504 be kept constant, and therefore, in accordance with the phase difference adjustment bend 502, the bend may be applied only to the portion of the ground 504 adjacent to the signal line (differential high-frequency line 501) in which the phase difference adjustment bend 502 is formed such that the distance between the signal line (differential high-frequency line 501) and the ground 504 is constant.

### [Another Form of FPC and Differential High-Frequency Line]

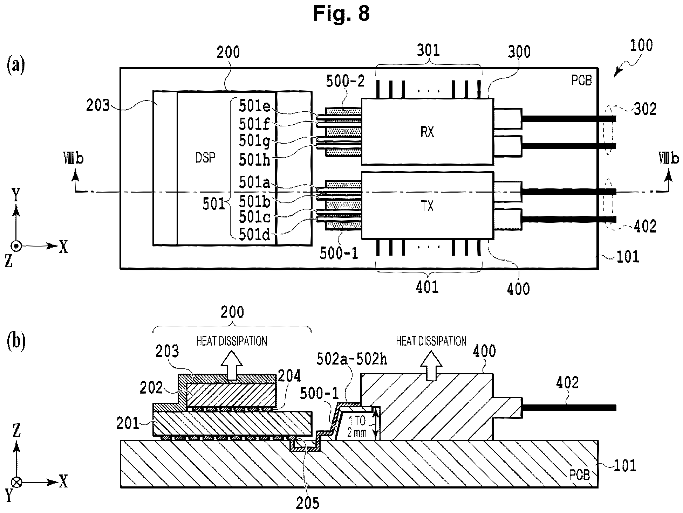

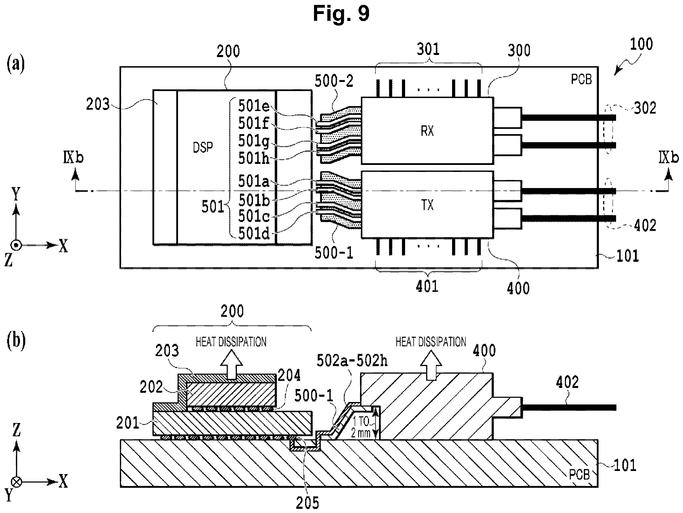

As described above, in order to improve the high frequency characteristics of the optical transceiver, the form in which the FPCs 500-1 and 500-2 and the DSP substrate 201 are directly connected is desirable, but, as illustrated in Figs. 8 and 9, they may be connected via the PCB 101.

Fig. 8 is a view illustrating an outline of a configuration of an optical transceiver 600 according to the present disclosure, Fig. 8(a) illustrates a top view, and Fig. 8(b) illustrates a cross-sectional view taken along line VIIIb-VIIIb. The optical transceiver 600 has a configuration in which the FPCs 500-1 and 500-2 are set to be relatively short, and a bent portion is not formed so that characteristic deterioration does not occur in the FPCs 500-1 and 500-2. In such an optical transceiver 600, the FPCs 500-1 and 500-2 have a shape that is straight when viewed from above, but, since pitch conversion is necessary in consideration of connection with the DSP substrate in the signal path, it is necessary to form a bend at a portion of the differential high-frequency line 501 drawn into the PCB 101, and characteristics may be deteriorated along with the bend. Therefore, in the optical transceiver 600, it is necessary to form the above-described phase difference adjustment bend 502 in the portion of the differential high-frequency line 501 drawn into the PCB 101. However, in general, the PCB has higher manufacturing cost and design cost than the FPC, and it is difficult to change the design or the like. Therefore, in the PCB 101, it is desirable to form only a straight line without providing a bent structure.

Fig. 9 is a view illustrating an outline of a configuration of an optical transceiver 700 according to the present disclosure, Fig. 9(a) illustrates a top view, and Fig. 9(b) illustrates a cross-sectional view taken along line IXb-IXb. In the optical transceiver 700, pitch conversion and bend formation of the differential high-frequency line 501 are performed in the FPCs 500-1 and 500-2, and a portion of the differential high-frequency line 501 drawn into the PCB 101 has a configuration of only a straight line without bending. In general, the FPC has characteristics that it is easy to change the design of the differential high-frequency line because trial production cost and the like are inexpensive and availability is high as compared with the PCB. Accordingly, there is an advantage that the phase difference adjustment bend 502 described above can be formed more easily than in the case of the optical transceiver 600. In consideration of such a point, it is desirable that the pitch conversion and the bending of the differential high-frequency line 501 due to the pitch conversion are formed in the FPCs 500-1 and 500-2 like the optical transceiver 100 and the optical transceiver 700.

Similarly, a differential high-frequency line having a bend can also be formed in the DSP substrate 201 and the optical modules 300 and 400. Also in this case, from the same viewpoint, it is useful to introduce the phase difference adjustment bend 502 from the viewpoint of improving the characteristics.

As described above, the optical transceiver according to the present disclosure is configured such that the differential high-frequency line has the bent portion from the viewpoint of improving characteristics (suppressing loss). In the above example, the description has been given assuming that the FPC also has the bent portion, but the FPC may have any shape as long as the differential high-frequency line is configured to have the bent portion.

In addition, the configuration of the differential high-frequency line may be arbitrary, and may be, for example, an SS line configuration, a GSSG configuration, a GSGSG configuration, an SGS configuration, a coplanar line, a microstrip line configuration, or another similar configuration.

### Industrial Applicability

The optical transceiver according to the present disclosure can be used for optical communication.

### Reference Signs List

- 100: Optical transceiver
- 200: DSP
- 201: DSP substrate
- 202: DSP chip
- 203: Lid
- 300: Rx module (optical module)
- 301: DC lead pin
- 400: Tx module (optical module)
- 401: DC lead pin
- 501: Differential high-frequency line
- 501a, 501c, 501f, 501h: p-side line
- 501b, 501d, 501e, 501g: n-side line
- 503: Base material
- 504: Ground
- 505: Through-hole
- 600: Optical transceiver
- 700: Optical transceiver
- 800: Optical transceiver
- 802: DSP
- 804: DSP substrate
- 805: DSP chip
- 807: Transmission module
- 808: Optical fiber

## Claims

1. An optical transceiver, comprising:
at least one optical module that is mounted on a printed circuit board (PCB);
a digital signal processor (DSP) that is mounted on the PCB;
a flexible printed circuit (FPC) that connects the DSP and the optical module or the PCB and the optical module; and
a differential high-frequency line that is configured such that a p-side line and an n-side line form a differential pair, and is formed such that a signal propagates inside a DSP substrate of the DSP, inside the optical module, and between the DSP and the optical module,
wherein
the differential high-frequency line disposed between the DSP and the optical module has at least one first bent portion.

2. The optical transceiver according to claim 1, wherein
the differential high-frequency line further includes at least one phase adjustment bend for eliminating a phase difference caused by the first bent portion, and
the phase adjustment bend is formed before and after a portion where a difference occurs in line length between the p-side line and the n-side line of the differential high-frequency line or within a range of a portion where a difference occurs in the line length, and is configured such that a phase difference between signals propagating through the p-side line and the n-side line after propagating through the phase adjustment bend is within ± 0.2 ps.

3. The optical transceiver according to claim 2, wherein
the phase adjustment bend is formed at a position within a length 1/2 times a guide wavelength at a maximum frequency of a necessary frequency band before and after the portion where a difference occurs in the line length between the p-side line and the n-side line of the differential high-frequency line, and
a length of the phase adjustment bend is within 1/2 times the guide wavelength at the maximum frequency of the necessary frequency band.

4. The optical transceiver according to claim 3, wherein
the FPC connects the PCB and the optical module,
the differential high-frequency line is further disposed in the PCB, and is configured to propagate the signal between the optical module and the DSP through the differential high-frequency line disposed in the PCB, and
the first bent portion and the phase adjustment bend are formed in the differential high-frequency line disposed in the PCB, or
the first bent portion and the phase adjustment bend are formed in the differential high-frequency line disposed on the FPC.

5. The optical transceiver according to claim 3, wherein
a configuration of the differential high-frequency line disposed between the DSP and the optical module is a GSSG configuration or a GSGSG configuration,
a line width of the first bent portion is narrower than a line width of a straight portion, and
in the first bent portion, a distance between ground and the differential high-frequency line that is signal is configured to be shorter than a distance between ground and the differential high-frequency line that is signal in the straight portion.

6. The optical transceiver according to claim 3, wherein
a configuration of the differential high-frequency line disposed between the DSP and the optical module is a GSSG configuration or a GSGSG configuration,
a distance between ground and the differential high-frequency line that is signal is constant in the first bent portion, and
the differential high-frequency line has an equal length between channels.

7. The optical transceiver according to claim 3, wherein
the at least one optical module
includes an optical transmitter module including an optical modulator and a driver integrated circuit, and an optical receiver module including a photodetector and a transimpedance amplifier, or
is a single optical transmission/reception module including functions of both the optical transmitter module and the optical receiver module, the at least one optical module being mounted such that a terrace surface faces an upper surface of the PCB, a heat generation component being mounted such that heat is dissipated toward a surface opposite to a mounting surface on the PCB inside a package,
the FPC connects the DSP and the optical module, and
the phase adjustment bend is formed in the differential high-frequency line disposed on the FPC.

8. The optical transceiver according to claim 7, wherein
the DSP further includes
a lid covering a region including at least a region of the DSP chip and excluding a PAD of the DSP substrate.
